# EUROPEAN PATENT APPLICATION

(11) **EP 4 465 587 A1**
(43) Date of publication of application: **20.11.2024**
(21) Application number: 23173978.0
(22) Date of filing: 17.05.2023
(51) Int. Cl.: H04L 9/08

(54) **AN ECONOMIC AND ANTICIPATORY QUANTUM KEY DISTRIBUTION NETWORK**

(71) Applicant: Deutsche Telekom AG, 53113 Bonn (DE)
(72) Inventor: GUNKEL, Matthias, 64291 Darmstadt (DE); WISSEL, Felix, 64397 Modautal (DE)
(74) Representative: RDL Patentanwälte PartG mbB

(57) **Abstract**

A method for operating a quantum key distribution network, QKDN, wherein a first quantum key distribution, QKD, node of a QKDN and a second QKD node of the QKDN cooperatively generate a quantum key, the first QKD node and the second QKD node being directly linked to each other; the first QKD node stores a generated quantum key in a keystore of the first QKD node; and the second QKD node stores the generated quantum key in a keystore of the second QKD node, the stored quantum key establishing a primary quantum key relation of the first QKD node and the second QKD node; a QKDN controller of the QKDN determines a third QKD node of the QKDN and instructs the second QKD node to transmit the generated quantum key to the determined third QKD node; the second QKD node, upon the instruction of the QKDN controller, transmits the generated quantum key to the determined third QKD node; the determined third QKD node stores the transmitted quantum key in a keystore of the determined third QKD node, the stored quantum key establishing a secondary quantum key relation of the first QKD node and the determined third QKD node; a QKD node, a QKDN controller, a QKDN network and a computer program product.

## Description

The invention relates to a method for operating a quantum key distribution network, QKDN, wherein a first quantum key distribution, QKD, node of a QKDN and a second QKD node of the QKDN cooperatively generate a quantum key, the first QKD node and the second QKD node being directly linked to each other; the first QKD node stores a generated quantum key in a keystore of the first QKD node; and the second QKD node stores the generated quantum key in a keystore of the second QKD node, the stored quantum key establishing a primary quantum key relation of the first QKD node and the second QKD node; a QKDN controller of the QKDN determines a third QKD node of the QKDN and instructs the second QKD node to transmit the generated quantum key to the determined third QKD node; the second QKD node, upon the instruction of the QKDN controller, transmits the generated quantum key to the determined third QKD node; the determined third QKD node stores the transmitted quantum key in a keystore of the determined third QKD node, the stored quantum key establishing a secondary quantum key relation of the first QKD node and the determined third QKD node. The invention further relates to a QKD node, a QKDN controller, a QKDN and a computer program product.

A quantum key distribution network, QKDN, comprises a plurality of quantum key distribution, QKD, nodes and is configured for generating quantum keys to be used for encrypting and decrypting payload data. A first QKD node of the QKDN and a second QKD node of the QKDN directly linked, i.e. optically coupled, to each other form a QKD pair for cooperatively generating quantum keys.

The QKDN is usually combined with a communication network comprising a plurality of communication nodes and being configured for transmitting payload data, i.e. sending or receiving, payload data. The communication network may also be called a payload network.

Each communication node of the communication network may be configured as a terminal node of the communication network and comprise an encryptor for encrypting payload data to be transmitted or decrypting transmitted payload data.

The encryptor encrypts the payload data to be transmitted or decrypts the transmitted payload data applying quantum keys to the payload data, the quantum keys provided by a QKD node of the QKDN, the QKD node being exclusively connected to the communication node. The QKDN and the communication network may have and usually have different physical topologies.

The QKDN may generate and usually generates the quantum keys steadily and independent of an occurrence of payload data to be transmitted. Hence, each QKD node comprises a keystore configured for temporarily storing generated quantum keys not currently used by the respective connected communication node. It is noted that each QKD node may have and usually has more than one QKD node directly linked thereto and still comprise a single keystore for storing quantum keys cooperatively generated with each of the directly linked QKD nodes.

However, the keystore may either overflow or run empty when the connected communication node is either too idle or too busy as compared with a quantum key generation rate of the QKD node. As a consequence, generated quantum keys have to be abandoned or payload data has to be delayed or be rerouted within the communication network which is expensive or inefficient, respectively.

It is, therefore, an object of the invention to suggest a method for operating a QKDN more economically and allowing for a higher efficiency of a combined communication network. Further objects of the invention are to provide a QKD node, a QKDN controller, a QKDN and a computer program product.

One aspect of the invention is a method for operating a quantum key distribution network, QKDN, wherein a first quantum key distribution, QKD, node of a QKDN and a second QKD node of the QKDN cooperatively generate a quantum key, the first QKD node and the second QKD node being directly linked to each other; the first QKD node stores a generated quantum key in a keystore of the first QKD node; and the second QKD node stores the generated quantum key in a keystore of the second QKD node, the stored quantum key establishing a primary quantum key relation of the first QKD node and the second QKD node; a QKDN controller of the QKDN determines a third QKD node of the QKDN and instructs the second QKD node to transmit the generated quantum key to the determined third QKD node; the second QKD node, upon the instruction of the QKDN controller, transmits the generated quantum key to the determined third QKD node; the determined third QKD node stores the transmitted quantum key in a keystore of the determined third QKD node, the stored quantum key establishing a secondary quantum key relation of the first QKD node and the determined third QKD node. As usual, the quantum key stored by both the first QKD node and the second QKD node may be considered a secret shared by the first QKD node and the second QKD node, the secret defining the primary quantum key relation. The secret may be denoted a shared secret of the first and second QKD nodes for short. The primary quantum key relation may be considered a physical quantum key relation due to the optical link of the first and second QKD nodes. The QKDN controller also determines a route for transmitting the generated quantum key.

Having been transmitted to the third QKD node, the quantum key stored by both the first QKD node and the third QKD node defines the secondary quantum key relation which is logically equivalent to a primary quantum key relation and, hence, may be considered a logical quantum key relation established between QKD nodes not being optically coupled to each other and, hence, not having cooperatively generated the transmitted quantum key.

According to the invention, the QKDN controller determines the third QKD node anticipatorily and to be different from the first QKD node. The anticipatory determination, on the one hand, benefits from the quantum key generation being completely independent of an occurrence of payload data to be transmitted and, on the other hand, causes an anticipatory transmission of the generated quantum key. Herein, "anticipatory" is to be understood as "at any time before" an event might occur in the QKDN which lowers an economic efficiency of the QKDN or lowers an operational efficiency of the combined communication network. In other words, the QKDN controller proactively avoids a threatening efficiency loss.

The generated quantum key may be transmitted via the combined communication network, i.e., payload network, or via a QKD control network, i.e., auxiliary network. The QKDN and the QKD control network may have the same topology. Transmitting, instead of abandoning, the quantum key readily allows for a more economical operation of the QKDN but is not sufficient for the more economical operation of the QKDN. Rather, the generated quantum key must not be transmitted to the first QKD node to be economical as the transmitted quantum key would establish a quantum key relation of the first QKD with itself, i.e. a reflexive quantum key relation, which is equivalent with abandoning the quantum key. The reflexive quantum key relation is useless for transmitting payload data via the combined communication network.

In an embodiment, the QKDN controller predicts an overflow of the keystore of the second QKD node and instructs the second QKD node when a received current filling level of the keystore of the second QKD node exceeds a predetermined upper filling threshold defining a critical fullness. The predetermined upper filling threshold defines a safety buffer allowing for the keystore of the first QKD node to be emptied in time before overflowing.

Preferably, the QKDN controller determines the third QKD node to be a QKD node of the QKDN with a keystore having a lowest filling level among all keystores of QKD nodes of the QKDN or a filling level lower than a predetermined lower filling threshold defining a critical emptiness. The predetermined lower filling threshold defines a safety buffer allowing for the keystore of the determined QKD node to be filled in time before running empty. Of course, the QKDN controller may determine the third QKD node dependent on a QKD distance from the second QKD node. This determination of the third QKD node may be frequently repeated and eventually causes the generated quantum keys to be distributed over the QKDN substantially even which is a first way of balancing the QKDN.

Additionally or alternatively, the QKDN controller calculates a mismatch of a current distribution of received current filling levels and a predicted distribution of future filling levels of all keystores of QKD nodes of the QKDN and instructs the second QKD node when the calculated mismatch exceeds an upper mismatch threshold defining a critical mismatch, the predicted distribution corresponding to an estimated future demand of quantum keys. The predicted distribution may be based on statistic, i.e., empiric data describing a load of the combined communication network both topologically and timely. Of course, the distribution may be predicted by an artificial neural network evaluating the statistic data. The mismatch threshold defines a safety buffer allowing for the QKDN to adapt to a future payload occurrence in time before any efficiency loss of the combined communication network.

Preferably, the QKDN controller determines the third QKD node to be a QKD node of the QKDN reducing or minimizing the calculated mismatch after receiving the transmitted quantum key. Of course, the QKDN controller may determine the third QKD node dependent on a QKD distance from the second QKD node. This determination of the third QKD node may be frequently repeated, for instance by means of an iteration or a recursion, and eventually causes the generated quantum keys to be distributed over the QKDN optimally adapted to a future payload occurrence which is a second way of balancing the QKDN. The determination of the third QKD node may be continuously adapted when the predicted distribution varies over time.

The QKDN controller may receive current filling levels transmitted repeatedly and automatically by all QKD nodes of the QKDN. The QKDN controller may, for instance, periodically request the filling levels from the QKD nodes. Alternatively, each QKD node may transmit the respective filling level periodically and autonomously. Accordingly, the transmission of the filling levels may be caused by a batch job executed by either the QKDN controller or each QKD node.

The batch job may also trigger the QKDN controller to evenly distribute stored quantum keys over the QKDN without a keystore threatening to overflow, thus, proactively preventing any keystore from overflowing.

The QKDN controller may additionally or alternatively receive a current filling level transmitted by the second QKD node when the current filling level exceeds an upper filling threshold defining a critical fullness. Reception of the current filling level is caused by the second QKD node event-driven.

The generated quantum key is preferably transmitted encrypted using a quantum key of an established secondary quantum key relation of the second QKD node and the determined third QKD node and removing the used stored quantum key from the respective keystores of the second QKD node and the determined third QKD node. The encrypted transmission is mandatory for safety reasons. Using the established secondary quantum key relation consumes a single quantum key for the transmission which is the most economic way of transmitting a quantum key.

The QKDN controller may instruct the second QKD node to transmit a plurality of generated quantum keys to the determined third QKD node and the second QKD node transmits the plurality of quantum keys to the determined third QKD node. Transmitting more than one quantum key at a time accelerates the QKDN to be balanced.

Advantageously, the QKDN controller controls each triplet of QKD nodes of the QKDN, the triplet comprising a pair of directly linked QKD nodes and another QKD node different from the pair as the first, second and third QKD nodes, respectively. The QKDN controller, thus, completely controls the QKDN.

The first QKD node and the second QKD node may repeatedly generate a sequence of quantum keys at a quantum key generation rate, the sequence of quantum keys comprising the quantum key. Different pairs of the QKD nodes may generate sequences of quantum keys at different quantum key generation rates due to the QKD nodes having component tolerances and/or being provided by different manufacturers. The quantum key generation rate of QKD pairs provided by a single manufacturer may readily vary by a factor of 10 or 100 due to different damping factors of glass fibers linking the respective QKD nodes of the QKD pairs. Apart from that, quantum key generation rates may vary dependent on environmental factors, e.g., weather conditions.

Another aspect of the invention is a quantum key distribution network, QKDN, controller for a QKDN. The QKDN controller is configured for controlling the operation of QKD nodes of the QKDN.

According to the invention, the QKDN controller is configured for carrying out a method according to an embodiment of the invention together with at least three quantum key distribution, QKD, nodes of the QKDN. The QKDN controller allows for the QKDN to be operated very economically and allows for the combined communication network to be operated at a high efficiency.

A third aspect of the invention is a quantum key distribution, QKD, node for a QKD network, QKDN, comprising a keystore. Each QKD node of the QKDN is configured for generating quantum keys in cooperation with another QKD node of the QKDN. Usually, the QKD node is paired with more than one other QKD node of the QKDN.

According to the invention, the QKD node is configured for carrying out a method according to an embodiment of the invention together with a QKDN controller and at least two other QKD nodes. The QKD node allows for the QKDN to be operated very economically and allows for the combined communication network to be operated at a high efficiency.

A fourth aspect of the invention is a quantum key distribution network, QKDN, comprising a plurality of quantum key distribution, QKD, nodes, the QKD nodes being linked to each other in pairs and forming a connected graph, and a QKDN controller, the QKDN controller being functionally connected to each QKD node. The QKDN comprises a single partition of linked QKD nodes and a QKDN controller configured for centrally controlling each QKD node of the QKDN. The QKDN is combined with a communication network for transmitting payload data.

According to the invention, the QKD nodes are configured according to an embodiment of the invention and the QKDN controller is configured according to an embodiment of the invention. The QKDN economically allows for the combined communication network to be operated at a high efficiency.

A fifth aspect of the invention is a computer program product, comprising a digital storage medium storing a program code. The digital storage medium exemplarily comprises a compact disk, CD, a digital versatile disk, DVD, a universal serial bus, USB, stick, a hard disk drive, HDD, a random access memory, RAM, chip, a cloud storage and the like.

According to the invention, the program code causes a computing device to carry out a method according to an embodiment of the invention as a quantum key distribution, QKD, node of a quantum key distribution network, QKDN, according to an embodiment of the invention or as a QKDN controller of the QKDN according to an embodiment of the invention, respectively, when being executed by a processor of the computing device. The program code enables the computing device to participate in the inventive method as either the QKD node or the QKDN controller. Of course, the computer program products for implementing the QKD node and the QKDN controller, respectively, may comprise different program codes. The computer program product may alternatively comprise different program codes for implementing the QKD node and the QKDN controller, respectively.

It is an essential advantage of the inventive method that a QKDN is operated more economically and allows for a higher efficiency of a combined communication network.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

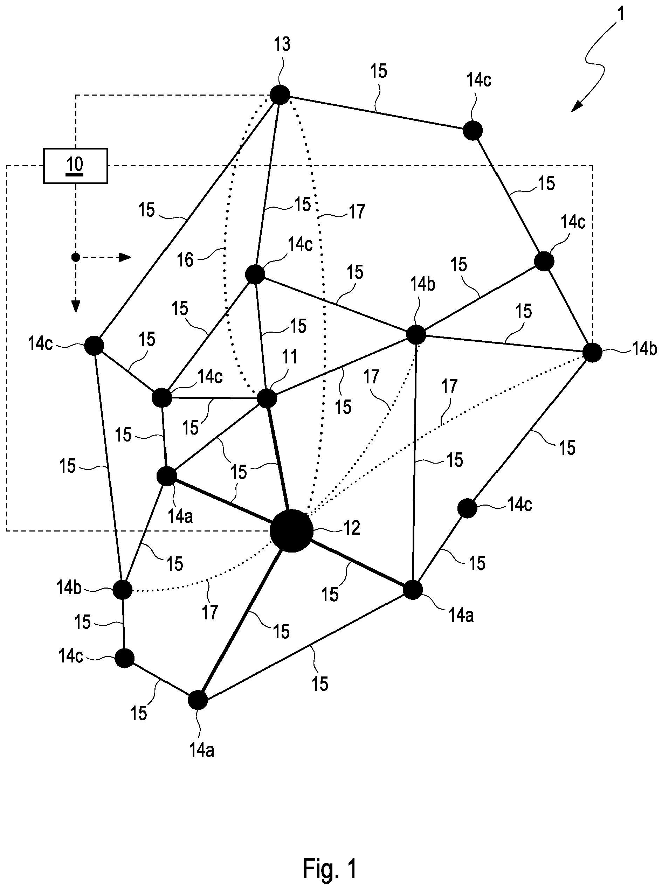

- Fig. 1: schematically shows an entity diagram of a QKDN according to an embodiment of the invention.

Fig. 1 schematically shows an entity diagram of a QKDN 1 according to an embodiment of the invention. The quantum key distribution network, QKDN, 1 comprises a plurality of quantum key distribution, QKD, nodes 11, 12, 13 according to an embodiment of the invention. The QKD nodes 11, 12, 13 comprise a keystore, respectively, and are linked to each other in pairs and form a connected graph. The QKDN 1 further comprises a QKDN controller 10 according to an embodiment of the invention. The QKDN controller 10 is functionally connected to each QKD node 11, 12, 13, 14a, 14b, 14c as exemplarily and only partially illustrated by dashed lines.

The quantum key distribution network, QKDN, controller 10 is configured for carrying out a method according to an embodiment of the invention as follows together with at least three quantum key distribution, QKD, nodes 11, 12, 13 of the QKDN 1. The quantum key distribution, QKD, node 11, 12, 13 is configured for carrying out the method as follows together with the QKDN controller 10 and at least two other QKD nodes 11, 12, 13.

The QKDN controller 10 and the QKD nodes 11, 12, 13 may be implemented by means of a computer program product. The computer program product comprises a digital storage medium storing a program code. The program code causes a computing device to carry out the method as follows as the quantum key distribution, QKD, node 11, 12, 13 of the quantum key distribution network, QKDN, 1 or as the QKDN controller 10 of the QKDN 1, respectively, when being executed by a processor of the computing device.

The quantum key distribution network, QKDN, 1 is operated as follows.

A first quantum key distribution, QKD, node 11 of a QKDN 1 and a second QKD node 12 of the QKDN 1 cooperatively generate a quantum key, the first QKD node 11 and the second QKD node 12 being directly linked to each other. The first QKD node 11 and the second QKD node 12 may repeatedly generate a sequence of quantum keys at a substantially constant quantum key generation rate, the sequence of quantum keys comprising the quantum key.

The first QKD node 11 stores the generated quantum key in the keystore of the first QKD node 11.

The second QKD node 12 stores the generated quantum key in the keystore of the second QKD node 12. The stored quantum key establishes a primary quantum key relation 15 of the first QKD node 11 and the second QKD node 12.

The QKDN controller 10 may receive current filling levels transmitted repeatedly by all QKD nodes of the QKDN 1. Additionally or alternatively, the QKDN controller 10 may receive a current filling level transmitted by the second QKD node 12 when the current filling level exceeds a predetermined upper filling threshold defining a critical fullness.

The QKDN controller 10 may predict an overflow of the keystore of the second QKD node 12 and instruct the second QKD node 12 when a received current filling level of the keystore of the second QKD node 12 is detected to exceed an upper filling threshold defining a critical fullness. The QKDN controller 10 may further determine a third QKD node 13 to be a QKD node of the QKDN 1 with a keystore having a lowest filling level among all keystores of QKD nodes of the QKDN 1 or a filling level lower than a predetermined lower filling threshold defining a critical emptiness.

The QKDN controller 10 may also calculate a mismatch of a current distribution of the received current filling levels and a predicted distribution of future filling levels of all keystores of QKD nodes of the QKDN 1 and instructs the second QKD node 12 when the calculated mismatch is detected to exceed an upper mismatch threshold defining a critical mismatch, the predicted distribution corresponding to an estimated future demand of quantum keys. The QKDN controller 10 may further determine the third QKD node 13 to be a QKD node of the QKDN 1 reducing or minimizing the calculated mismatch after receiving the transmitted quantum key.

The determined third QKD node 13 is determined by the QKDN controller 10 anticipatorily and to be different from the first QKD node 11.

The second QKD node 12, upon the instruction of the QKDN controller 10, transmits the generated quantum key to the determined third QKD node 13.

The generated quantum key is preferably transmitted encrypted using a quantum key of an established quantum key relation 17 of the second QKD node 12 and the determined third QKD node 13 and removing the used stored quantum key from the respective keystores of the second QKD node 12 and the determined QKD node 13. The QKDN controller 10 may even instruct the second QKD node 12 to transmit a plurality of generated quantum keys to the determined third QKD node 13, and, accordingly, the second QKD node 12 may transmit the plurality of quantum keys to the determined third QKD node 13.

The determined third QKD node 13 stores the transmitted quantum key in a keystore of the determined third QKD node 13. The stored quantum key establishes a secondary quantum key relation 16 of the first QKD node 11 and the determined third QKD node 13.

The QKDN controller 10 preferably controls each triplet of QKD nodes of the QKDN 1, the triplet comprising a pair of directly linked QKD nodes and another QKD node different from the pair as the first, second and third QKD nodes 11, 12, 13, respectively.

### Reference Numerals

- 1: quantum key distribution network, QKDN
- 10: QKDN controller
- 11: first quantum key, QKD, node
- 12: second QKD node
- 13: third QKD node
- 14a: further QKD node directly linked
- 14b: further QKD node not directly linked but related
- 14c: further QKD node neither directly linked nor related
- 15: primary quantum key relation
- 16: secondary quantum key relation
- 17: established secondary quantum key relation

## Claims

1. A method for operating a quantum key distribution network, QKDN, (1) wherein
- a first quantum key distribution, QKD, node (11) of a QKDN (1) and a second QKD node (12) of the QKDN (1) cooperatively generate a quantum key, the first QKD node (11) and the second QKD node (12) being directly linked to each other;
- the first QKD node (11) stores a generated quantum key in a keystore of the first QKD node (11);
- the second QKD (12) node stores the generated quantum key in a keystore of the second QKD node (12), the stored quantum key establishing a primary quantum key relation (15) of the first QKD node (11) and the second QKD node (12);
- a QKDN controller (10) of the QKDN (1) determines a third QKD node (13) of the QKDN (1) and instructs the second QKD node (12) to transmit the generated quantum key to the determined third QKD node (13);
- the second QKD node (12), upon the instruction of the QKDN controller transmits the generated quantum key to the determined third QKD node (13);
- the determined third QKD node (13) stores the transmitted quantum key in a keystore of the third QKD node (13), the stored quantum key establishing a secondary quantum key relation (16) of the first QKD node (11) and the determined third QKD node (13);
- the QKDN controller (10) determines the third QKD node (13) anticipatorily and to be different from the first QKD node (11).

2. The method according to claim 1, wherein the QKDN controller (10) predicts an overflow of the keystore of the second QKD node (12) and instructs the second QKD node (12) when a received current filling level of the keystore of the second QKD node (12) exceeds a predetermined upper filling threshold defining a critical fullness.

3. The method according to claim 2, wherein the QKDN controller (10) determines the third QKD node (13) to be a QKD node of the QKDN (1) with a keystore having a lowest filling level among all keystores of QKD nodes of the QKDN (1) or a filling level lower than a predetermined filling lower threshold defining a critical emptiness.

4. The method according to claim 1, wherein the QKDN controller (10) calculates a mismatch of a current distribution of received current filling levels and a predicted distribution of future filling levels of all keystores of QKD nodes of the QKDN (1) and instructs the second QKD node (12) when the calculated mismatch is detected to exceed an upper mismatch threshold defining a critical mismatch, the predicted distribution corresponding to an estimated future demand of quantum keys.

5. The method according to claim 4, wherein the QKDN controller (10) determines the third QKD node (13) to be a QKD node of the QKDN (1) reducing or minimizing the calculated mismatch after receiving the transmitted quantum key.

6. The method according to claim 2 or 4, wherein the QKDN controller (10) receives current filling levels transmitted repeatedly and automatically by all QKD nodes of the QKDN (1).

7. The method according to one of claims 2, 4 and 6, wherein the QKDN controller (10) receives a current filling level transmitted by the second QKD node (12) when the current filling level exceeds an upper filling threshold defining a critical fullness.

8. The method according to one of claims 1 to 7, wherein the generated quantum key is transmitted encrypted using a quantum key of an established secondary quantum key relation (17) of the second QKD node (12) and the determined third QKD node (13) and removing the used stored quantum key from the respective keystores of the second QKD node (12) and the determined third QKD node (13).

9. The method according to one of claims 1 to 8, wherein the QKDN controller (10) instructs the second QKD node (12) to transmit a plurality of generated quantum keys to the determined third QKD node (13) and the second QKD node (12) transmits the plurality of quantum keys to the determined third QKD node (13).

10. The method according to one of claims 1 to 9, wherein the QKDN controller (10) controls each triplet of QKD nodes of the QKDN (1), the triplet comprising a pair of directly linked QKD nodes and another QKD node different from the pair as the first, second and third QKD nodes (11, 12, 13), respectively.

11. The method according to one of claims 1 to 10, wherein the first QKD node (11) and the second QKD node (12) repeatedly generate a sequence of quantum keys at a quantum key generation rate, the sequence of quantum keys comprising the quantum key.

12. A quantum key distribution network, QKDN, controller (10) for a QKDN (1), being configured for carrying out a method according to one of claims 1 to 11 together with at least three quantum key distribution, QKD, nodes (11, 12, 13) of the QKDN (1).

13. A quantum key distribution, QKD, node (11, 12, 13) for a QKD network, QKDN, (1), comprising a keystore and being configured for carrying out a method according to one of claims 1 to 11 together with a QKDN controller (10) according to claim 12 and at least two other QKD nodes (11, 12, 13).

14. A quantum key distribution network, QKDN, (1) comprising a plurality of quantum key distribution, QKD, nodes (11, 12, 13, 14a, 14b, 14c) according to claim 13, the QKD nodes (11, 12, 13, 14a, 14b, 14c) being linked to each other in pairs and forming a connected graph, and a QKDN controller (10) according to claim 12, the QKDN controller (10) being functionally connected to each QKD node (11, 12, 13, 14a, 14b, 14c).

15. A computer program product, comprising a digital storage medium storing a program code, the program code causing a computing device to carry out a method according to one of claims 1 to 11 as a quantum key distribution, QKD, node (11, 12, 13) of a quantum key distribution network, QKDN, (1) according to claim 14 or as a QKDN controller (10) of the QKDN (1) according to claim 12, respectively, when being executed by a processor of the computing device.
